# EUROPEAN PATENT SPECIFICATION

(11) **EP 1 728 677 B1**
(45) Date of publication and mention of the grant of the patent: **28.11.2007**
(21) Application number: 05425389.3
(22) Date of filing: 30.05.2005
(51) Int. Cl.: B60N 2/46

(54) **A seat assembly provided with a tip-down backrest for a motor vehicle**
Sitzanordnung mit kippbarer Rückenlehne für ein Kraftfahrzeug
Ensemble de siège avec un dossier rabattable pour un véhicule automobile

(43) Date of publication of application: 06.12.2006
(73) Proprietor: C.R.F. SOCIETA' CONSORTILE PER AZIONI, 10043 Orbassano (Torino) (IT)
(72) Inventor: Masoero, Giorgio, c/o C.R.F., 10043 Orbassano (IT); Demontis, Salvatore, c/o C.R.F., 10043 Orbassano (IT); Storgato, Angelo, c/o C.R.F., 10043 Orbassano (IT); Ruspa, Cecilia, c/o C.R.F., 10043 Orbassano (IT); Camardella, Pietro, c/o C.R.F., 10043 Orbassano (IT); Pisino, Enrico, c/o C.R.F., 10043 Orbassano (IT)
(74) Representative: Jorio, Paolo

(56) References cited:
- EP-A- 0 943 483
- DE-U1- 20 000 479
- FR-A- 2 615 460
- US-A- 4 307 913
- US-A1- 2002 089 217
- PATENT ABSTRACTS OF JAPAN vol. 1999, no. 14, 22 December 1999 (1999-12-22) & JP 11 253273 A (KANTO AUTO WORKS LTD), 21 September 1999 (1999-09-21)

## Description

The present invention relates to a seat assembly provided with a backrest that can be tipped down for a motor vehicle.

In the passenger compartments of motor vehicles, it is known to use seats provided with backrests that can be tipped down, which have the reverse side of the backrest (hereinafter referred to as retro-backrest) equipped with trays or containers to optimize the comfort of the driver and/or of adjacent passengers when said backrests are arranged laid down flat on their corresponding seats.

There is currently felt the need to provide a seat assembly of the type just described that carries at least one armrest set alongside for increasing the comfort of a user, and that will present low encumbrance and, preferably, a relatively small number of components.

Preferably, there is felt the need to provide a seat assembly of a configurable type that can undergo a transverse displacement with respect to the longitudinal direction of advance of the vehicle in a simple and fast way by acting at the side of said seat assembly, without at the same time ruling out the possibility of enabling other adjustments of position to be made (longitudinal adjustment, height adjustment, adjustment of the inclination of the backrest, adjustment of headrest, etc.).

EP-A-0943483, which shows the features of the preamble of claim 1, discloses a seat row for a vehicle. The seat row has a centre seat folded down into a compact storage position with the seat squab lowered under the level of the adjacent seats and with the seat back having wings which fold about longditudinal axes to narrow the width of the seat back. The wings are mounted on a panel which is linked to the seat back frame by arms. This allows the folded wings to be raised to form arm rests for the adjacent seats. The wings can be folded out so that the backs of the wings are flush with the mounting plate to form a table top between the seats.

The aim of the present invention is to provide a seat assembly provided with a tip-down backrest for a vehicle which will enable the requirements set forth above to be achieved in a simple and inexpensive way.

According to the present invention a seat assembly is provided for a vehicle, as defined in claim 1.

For a better understanding of the present invention there is now described a preferred embodiment thereof, purely by way of non-limiting example, with reference to the attached drawings, wherein:
- Figure 1 is a perspective view of a preferred embodiment of a seat assembly provided with a backrest that can be tipped down for a vehicle built according to the present invention and set in a first functional position;
- Figure 2 is a front view of the seat assembly of Figure 1 set in a second functional position;
- Figure 3 is a front view of the seat assembly of Figure 1 set in the first functional position;
- Figures 4 and 5 are perspective views, at an enlarged scale, of a frame of the seat assembly of Figure 1, set in the first functional position and, respectively, in the second functional position;
- Figures 6 and 7 are, respectively, a perspective view from beneath and a side view of a detail, at an enlarged scale, of Figure 4;
- Figures 8 and 9 are, respectively, a perspective view from beneath and a side view of a detail, at an enlarged scale, of Figure 5;
- Figure 10 shows, in perspective view and at an enlarged scale, a retro-backrest of the seat assembly of Figure 1;
- Figure 11 is a perspective view, at an even further enlarged scale, of an armrest of Figure 10, set in a completely raised position; and
- Figure 12 is a side view, with parts removed for reasons of clarity, of the armrest of Figure 11, set in a different operative position.

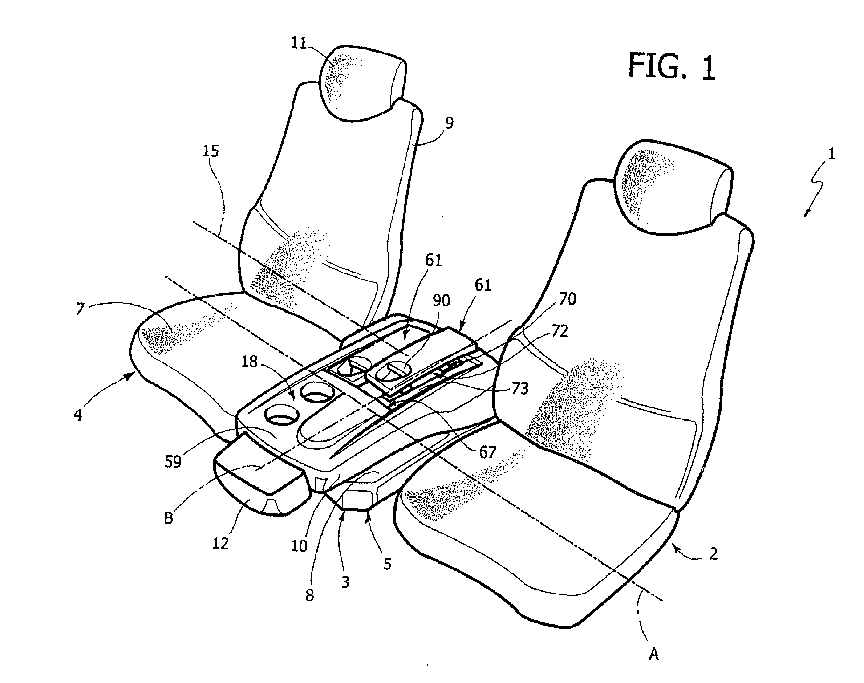

In Figure 1, the reference number 1 designates, as a whole, a passenger compartment of a motor vehicle housing a front driving seat 2, of a type that is known and is not described in detail herein, and a front seat assembly 3 for passengers, set alongside the seat 2 in a transverse direction A, i.e. in a horizontal direction orthogonal to a longitudinal axis B of advance of the motor vehicle.

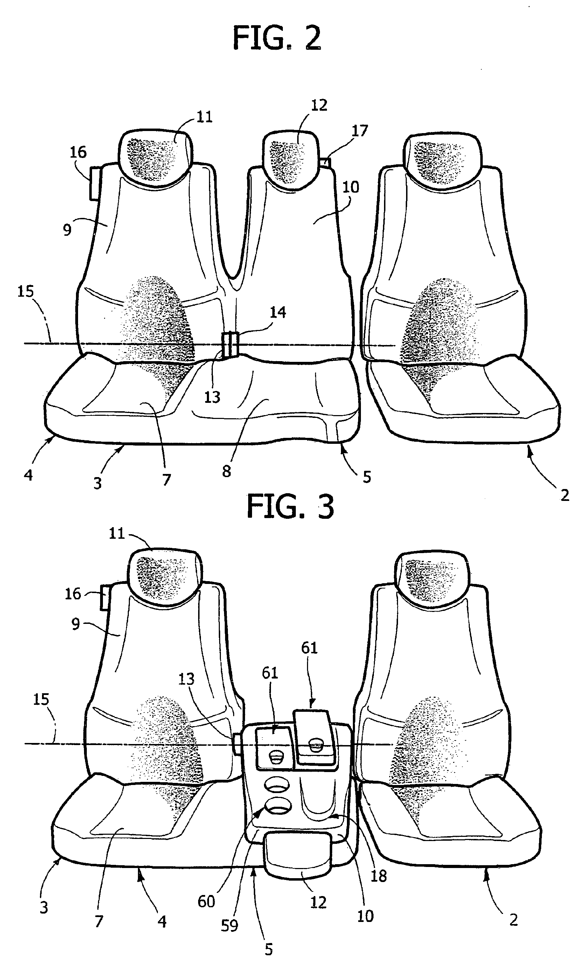

The seat assembly 3 comprises an external side seat 4 and a central seat 5, set alongside one another, having the same frame 6 (described in detail in what follows), and comprising respective seat portions 7, 8 joined to one another, and respective backrests 9, 10, which are provided with respective headrests 11, 12 and have an inclination that is adjustable, by means of respective devices 13, 14, which are known and not described in detail herein (schematically illustrated in Figure 2), independently of one another, about an axis 15 parallel to the direction A.

The backrests 9, 10 can be tipped down about the axis 15 independently of one another, from a raised position to a horizontal lowered position, in which they are laid down flat on the respective seat portions 7, 8, after manual actuation of respective controls 16, 17 for release (schematically illustrated in Figure 2), for example, levers carried by the backrests 9 and respectively, 10, for actuation of respective retention devices (known and not illustrated).

In particular, the backrests 9, 10 are provided with respective retro-backrests, i.e. rigid elements for rear covering or coating (of which only that of the backrest 10 is visible), which define, in the lowered position, an equipped resting surface 18.

With reference to Figures 2 and 3, the seat assembly 3 is configurable between a first functional position, in which the seat 4 can receive a passenger, whilst the seat 5 is moved up alongside the seat 2 with the backrest 10 set in the lowered position on the seat portion 8; and a second functional position, in which the seat 5 is set transversely at a distance from the seat 2 and can receive a corresponding passenger.

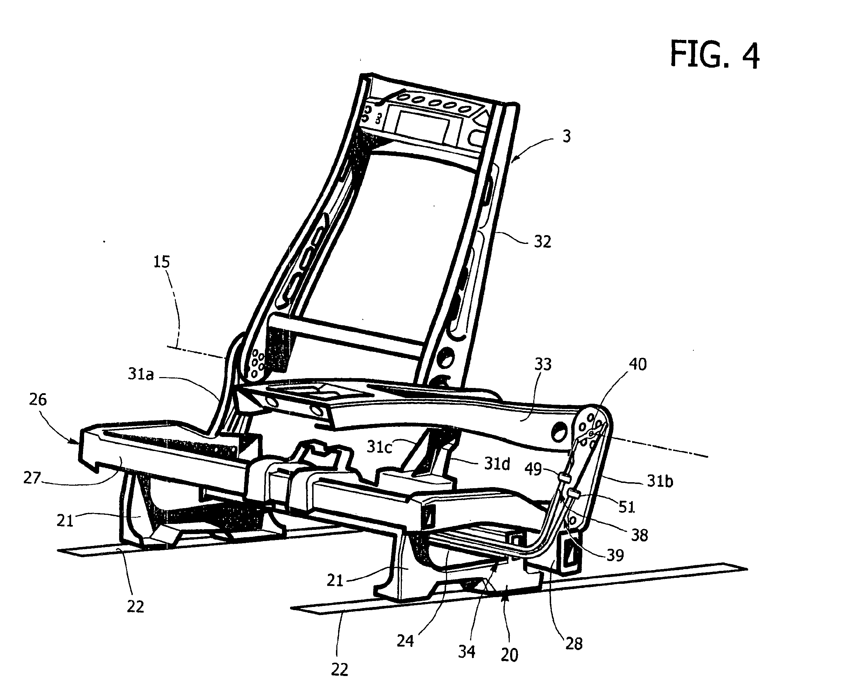

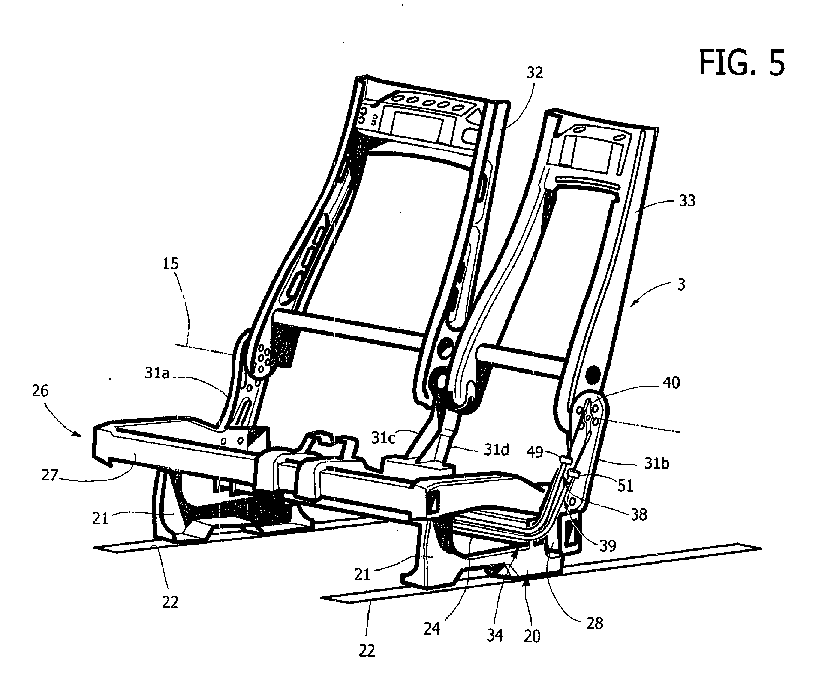

With reference to Figures 4 and 5, the frame 6 comprises a bottom structure 20, which is set in a fixed transverse position and comprises two side legs 21, which can slide longitudinally along respective guides 22 (illustrated schematically), fixed on the floor of the passenger compartment 1. To keep the structure 20 in a fixed longitudinal position along the guides 22, there is provided a releasable retention device (known and not illustrated), which can be unclamped by means of a manual action on a release device (also known and not illustrated), for example a lever carried by the structure 20 between the legs 21, to enable adjustment of the longitudinal position of the seat assembly 3.

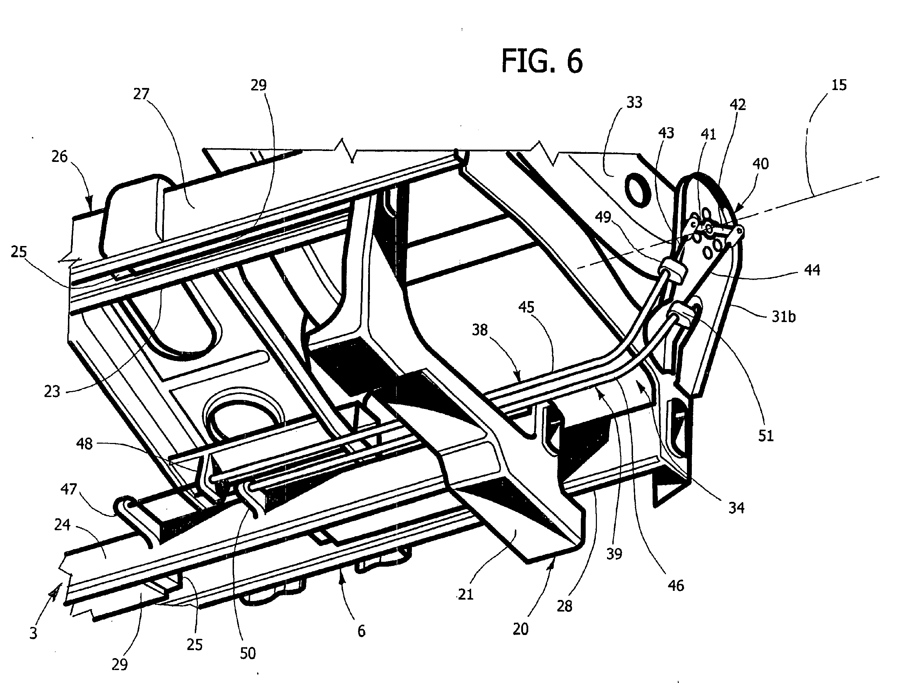

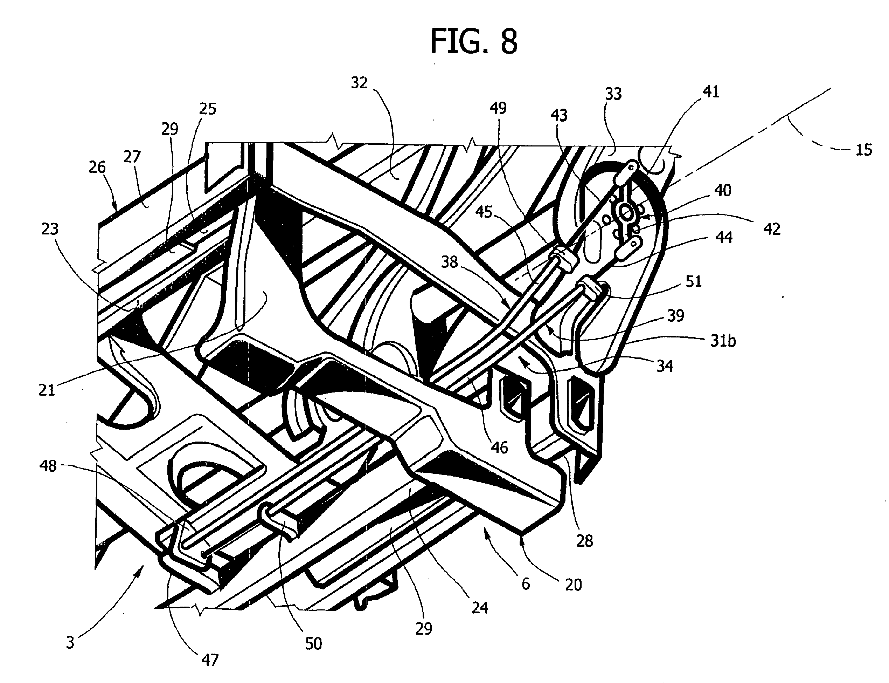

The structure 20 moreover comprises a front cross member 23 and a rear cross member 24, which are fixed to the legs 21 in longitudinal positions set at a distance from one another and carry, in fixed positions, respective guides 25 (Figures 6 and 8) for guiding a top structure 26, which carries the seat portions 7, 8, in the direction A.

The structure 26 comprises, in particular, a front cross member 27 set in front of the cross member 23, and a rear cross member 28 set behind the cross member 24. The cross members 27, 28 carry, in fixed positions, respective slides 29, which are slidably coupled to the guides 25 and are designed to be clamped with respect to the guides 25 by means of a further retention device (not illustrated) to keep the seat assembly 3 in either of the two functional positions. Said further retention device is released by manual actuation of a release control, in particular the control 17, in order to thus enable transverse translation of the structure 26 and hence of the seats 4, 5.

The structure 26 then comprises two side rear brackets 31a, 31b and two central rear brackets 31c, 31d, which extend in cantilever fashion upwards with respect to the cross member 28. The pair of brackets 31a, 31c and the pair of brackets 31b, 31d carry hinged at their top ends, about the axis 15, respective structures 32, 33, which in turn carry the backrests 9, 10 and the headrests 11, 12. In particular, the structure 33 and hence the seat 5 have a smaller width, in the direction A, than do the structure 32 and the seat 4.

With reference to Figures 2 and 3, the translation of the seats 4, 5 between the two aforesaid functional positions, i.e. along a travel of approach towards the seat 2 or else a travel of withdrawal away from the seat 2, is approximately 63 mm. The translation, along at least one of said travels of approach and of withdrawal, is obtained in response to a displacement of the backrest 10 with respect to the seat portion 8, in particular in response to a rotation of the backrest 10 about the axis 15 away from and towards a vertical position through an angle greater than 25° forwards. In other words, the position of the backrest 10 and the transverse position of the seats 4, 5 are mutually dependent.

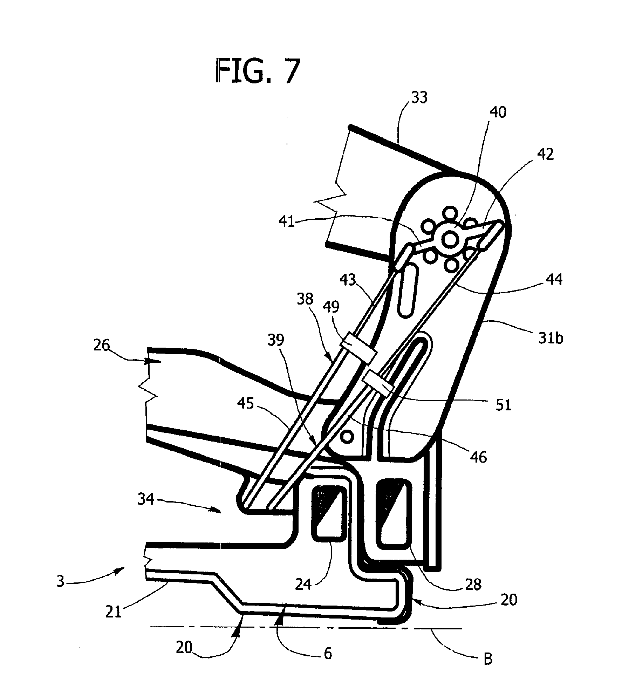

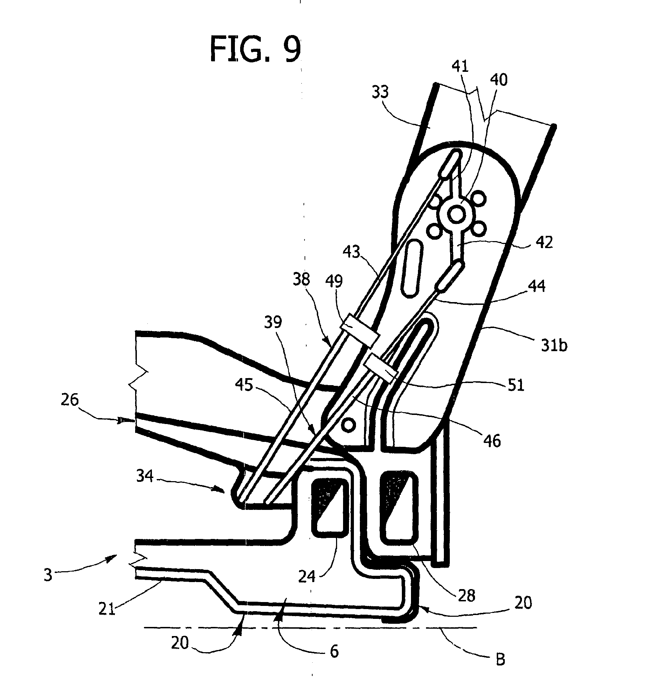

According to the preferred embodiment illustrated in Figures 4-9, there is provided a mechanical transmission 34 to bring about approach of the seats 4, 5 to the seat 2 when the backrest 10 is tipped down forwards on the seat portion 8, and to bring about withdrawal when the backrest 10 is tipped back towards its raised position. However, according to one solution (not illustrated), an electric motor, either rotary or linear, could be provided, which translates the seats 4, 5 transversely in response to the displacement of the backrest 10.

According to what is illustrated in Figures 4-9, the transmission 34 is of the flexible-transmission type and comprises two Bowden cables, designated by 38 and 39, and a rocker lever 40, which can turn about the axis 15 jointly with respect to the structure 33, projects axially from the bracket 31b towards the seat 2, and comprises two radial arms 41, 42 diametrally opposite to one another.

The cables 38, 39 comprise respective cores 43, 44 of fixed length, capable of flexing and of transmitting actions of tensile force, and respective sheaths 45, 46 of substantially fixed length, capable of flexing and of transmitting actions of pressure along their own length. The core 43, at its ends, is fixed to the arm 41 and to an appendage 47 carried in a fixed position by the structure 20, and traverses two appendages 48, 49 carried in fixed positions by the structure 26 and, respectively, by the bracket 31b, whilst the sheath 45 has its own ends coupled to the appendages 48, 49.

In turn, the core 44, at its ends, is fixed to the arm 42 and to the appendage 48, and traverses two appendages 50, 51 carried in fixed positions by the structure 20 and, respectively, by the bracket 31b, where the appendages 50 and 47 are arranged on opposite sides of, and aligned to, the appendage 48 in the direction A. The sheath 46, instead, has its own ends coupled to the appendages 50, 51 and has a longitudinal development greater than the maximum distance between the appendages 50, 51.

When the backrest 10 is tipped forwards from the raised position into the lowered position, the lever 40 rotates forwards (in a counterclockwise direction as viewed in the figures) and pulls the core 44 towards the outside of the sheath 46 through the appendage 51, which exerts a reaction in regard to rotation of the lever 40 and transmits it to the sheath 46 itself. The sheath 46 in turn transmits said reaction throughout its length in the form of an action of pressure, up to the appendage 50. Said pressure behaves like an action of thrust of the sheath 46 against the appendage 50 in the direction A and consequently brings about the relative motion between the appendage 50 and the structure 26 that carries the appendage 51.

During said relative motion, i.e. during translation of the structure 26 towards the first operative position, the sheath 46 is progressively distended, i.e. it assumes a more linear configuration, between the appendages 50, 51, while maintaining the length of its own development substantially fixed. At the same time, the sheath 45 slides on the core 43.

Likewise, when the backrest 10 is tipped back from the flat-down position towards the raised one, the lever 40 rotates backwards (in a clockwise direction as viewed in the figures) and pulls the core 43 towards the outside of the sheath 45 through the appendage 49, which exerts a reaction in regard to rotation of the lever 40 and transmits it to the sheath 45 itself. Whilst the core 43 is in tension, the sheath 46 in turn transmits the aforesaid reaction, throughout its length, in the form of an action of pressure, up to the appendage 48. Said pressure behaves like a thrust exerted by the sheath 45 in the direction A against the appendage 48, which consequently is displaced with respect to the core 43 towards the appendage 47.

During translation of the structure 26 towards the second operative position, the appendage 51 approaches the appendage 50, so that the sheath 46 progressively assumes a less linear configuration between the appendages 50, 51, while maintaining substantially fixed the length of its own development, whilst the core 44 slides in the sheath 46 itself.

According to a variant (not illustrated), there could be provided elastic means that are set between the structures 20 and 26 and are pre-loaded along one of the travels of approach and withdrawal to exert an action of thrust and bring about an automatic displacement along the other of the travels of approach and withdrawal of the seats 4, 5, when the slides 29 are released from the guides 25 by manual actuation of the control 17. In particular, the control 17 is coupled to the retention devices retaining the sliding of the slides 29 and the tipping of the backrest 10 by means of transmissions (not illustrated), which can be chosen from among the conventional ones available.

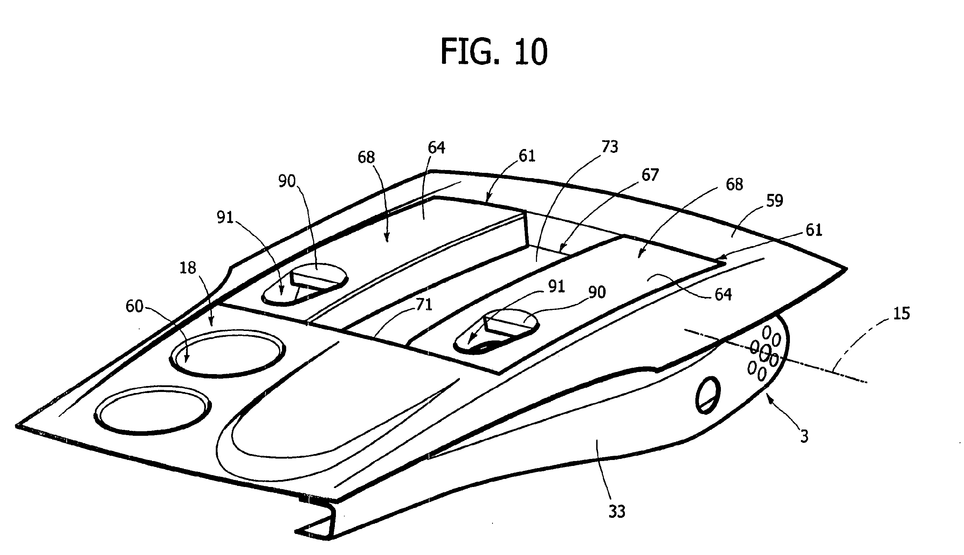

According to what is illustrated in Figure 10, the retro-backrest of the seat 5 is designated by the reference number 59, is coupled in a fixed position to the structure 33, in a way not described in detail, and has a plurality of trays or containers 60.

Two armrests 61 are arranged on the retro-backrest 59, i.e. on the rear face of the backrest 10, in positions so that they are set alongside one another for resting of an arm of the driver of the seat 2 and, respectively, of the passenger of the seat 4. Each armrest 61 comprises an attachment structure defined by two longitudinal guides 63 fixed to the structure 33, a resting body 64, and a device 66 for connection of the body 64 to the guides 63. Thanks to the device 66, the body 64 is movable between a stowed-away position, in which it is housed in the backrest 10, in particular in a recess 67 of the retro-backrest 59, and an extracted position, in which a surface 68 of the body 64 functions as armrest for the user. In particular, when the body 64 is set in its stowed-away position, the surface 68 extends flush with or as a prolongation of the surface 18 (Figure 10).

Incidentally, here and in what follows, the terms "front", "rear", "top", "bottom", "forwards", "backwards", etc. are to be understood for the armrest 61 with reference to the case where the backrest 10 is tipped down.

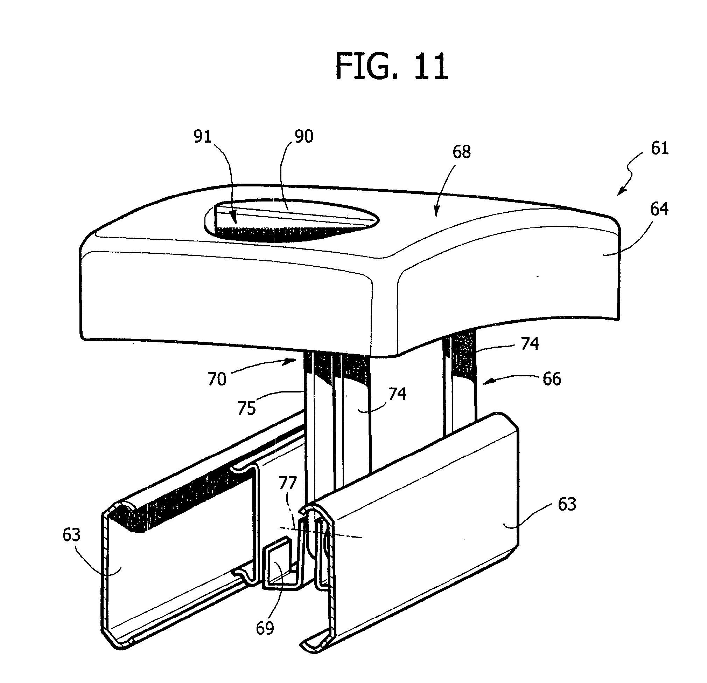

With reference to Figure 11, the device 66 comprises a slide member 69 set between the guides 63 and slidably coupled to the guides 63 themselves to be able to displace the body 64 longitudinally forwards, i.e. towards the headrest 12, up to an advanced end-of-travel position. Preferably, there is provided a retention and adjustment device (not illustrated), for example of the snap-action type or friction type, to retain the member 69 in the chosen longitudinal position in a releasable way.

The device 66 moreover comprises an articulated quadrilateral 70 for displacing the body 64 in height with respect to the surface 18 between a lowered position corresponding to the aforesaid stowed-away position (Figure 10), and a completely raised position (Figure 11). In particular, the recess 67 has a front wall 71, which prevents the body 64 from advancing along the guides 63 until it has been raised by a minimum height out of the recess 67 itself.

The articulated quadrilateral 70 traverses a longitudinal slit 72 (Figure 1) made in an end wall 73 of the recess 67, and comprises a pair of rear connecting rods 74, set at a transverse distance apart from one another, and a front connecting rod 75, set centrally with respect to the connecting rods 74.

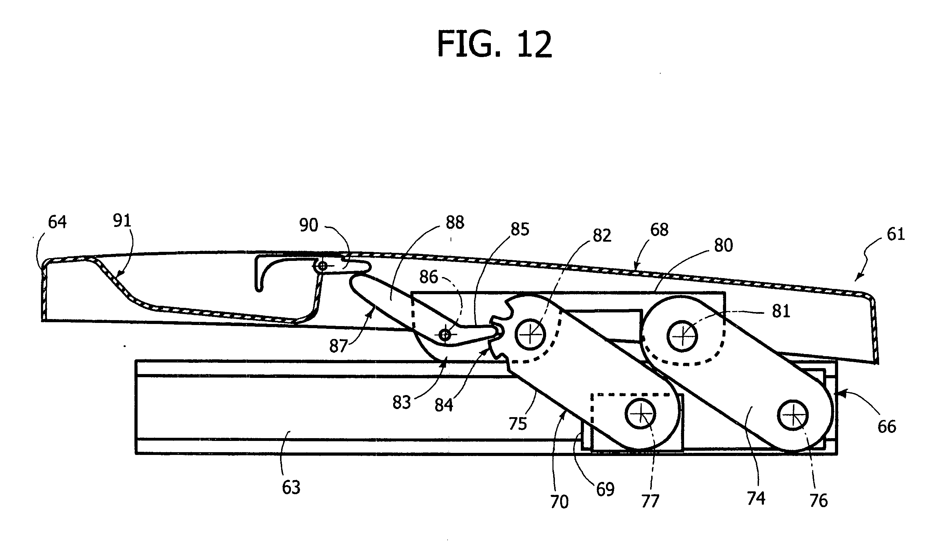

With reference to Figure 12, the bottom ends of the pair of connecting rods 74 and of the connecting rod 75 are hinged to the member 69 about respective axes 76, 77 parallel to the axis 15. Instead, the top ends of the pair of connecting rods 74 and of the connecting rod 75 are hinged to a member 80 for supporting the body 64, about respective axes 81, 82, which are also parallel to the axis 15.

To retain the body 64 at the desired height, there is provided a ratchet-like adjustment device 83, which comprises a toothing 84 made on the periphery of the top ends of the connecting rod 75, about the axis 82, and a pawl 85 hinged to the member 80 about an axis 86 parallel to the axis 82 and facing radially towards the toothing 84.

The pawl 85 performs the function of strut and prevents rotation of the connecting rod 75 forwards (in a counterclockwise direction as viewed in Figure 12) and hence lowering of the body 64, when it engages any of the slots of the toothing 84. Preferably, there is provided an elastic positioning element (not illustrated) to push the pawl 85 so that it engages the toothing 84, i.e. in a clockwise direction as viewed in Figure 12.

The pawl 85 defines the end of a rocker 87 comprising, on the diametrally opposite side, an arm 88, which can be rotated (in a counterclockwise direction as viewed in Figure 12) by manual actuation of a control 90, in particular a lever, to move the pawl 85 away from the toothing 84 upwards, so as to leave the body 64 free to be lowered.

In particular, with reference to Figure 10, the lever 90 covers the rear part of an opening 91 made through the surface 68, and can be rotated manually, in a clockwise direction as viewed in Figure 12, to push the arm 88 downwards and thus disengage the pawl 85, by insertion of one's fingers through the uncovered front part of the opening 91.

Instead, to lift the body 64, it is sufficient to pull the body 64 itself upwards, in so far as the toothing 84 and the pawl 87 are shaped in such a way as to slide on top of one another until the pawl 87 engages in the desired slot.

In use, when it is necessary to carry two passengers on the seat assembly 3, the latter is brought into the second operative position, by simply raising the backrest 10, so as to have more space in the direction A for the passenger sitting on the seat 5. When, instead, it is necessary to carry just one front-seat passenger, the seats 4, 5 can be displaced into the first functional position by sending the backrest 10 down: in this way, the surface 18 defined by the retro-backrest 59 contributes to rendering the journey more comfortable for the driver and the passenger on the seat 4, and at the same time the passenger on the seat 4 has available more space at the side between himself and the door (not illustrated) alongside the seat assembly 3.

In addition, also the armrests 61 arranged on, or carried by, the rear face of the backrest 10 can be raised from their stowed-away position, to contribute to improved ergonomics in the passenger compartment 1 on the front seats. In particular, thanks to their own possibilities of longitudinal adjustment and height adjustment, the positions of the resting bodies 64 can be adapted to drivers and passengers of different size/height, independently of the longitudinal position of the structure 20 along the guides 22 located on the floor.
From the foregoing it appears evident how the armrest 61 is located in a position that bestows particular compactness upon the seat assembly 3, can be adjusted in a simple way to achieve maximum ergonomics, is itself relatively simple, and has a limited number of pieces.

In addition, the seat assembly 3 enables a good compromise to be achieved between ergonomics, comfort and number of passengers carried, thanks to the transverse translation of the seats 4, 5, and is configurable in an extremely simple way, thanks to the fact that the same transverse translation is obtained in response to a displacement of the backrest 10.

It is then evident how the transverse translation provided for the seats 4, 5 does not hamper longitudinal adjustment of the seats 4, 5 themselves and adjustment of the inclination of the backrests 9, 10.

The transmission 34 provided to achieve the transverse translation is, moreover, relatively simple, inexpensive, and reliable.

The characteristics of the seat assembly 3 moreover afford a solution that particularly compact as well as being flexible, and can advantageously be applied not just in vehicles having three front seats, as described above by way of example, but also in vehicles with single seats, instead of double seats, and/or is applicable to rear seats, instead of front seats.

Finally, it is clear that modifications and variations can be made to the seat assembly 3 described and illustrated herein, without thereby departing from the sphere of protection of the present invention, as defined in the annexed claims.

In particular, there could be provided a device for height adjustment of the seat portions 7, 8, for example included in the structure 20.

In addition, there could be provided an electric motor for tipping the backrest 10 about the axis 15, instead of providing a forward/backward tipping of a manual type, but always with an angular displacement in response to which at least one between the seats 4, 5 translates transversely.

In addition, there could be provided connection devices different from the ones described by way of example for connecting the body 64 to the backrest 10 in a movable way.

## Claims

1. A seat assembly (3) for a vehicle; the seat assembly comprising:
- at least one seat portion (8);
- at least one backrest (10), which is movable with respect to said seat portion (8) between a raised position and a lowered position in which it is laid down flat on said seat portion (8); said backrest (10) comprising a supporting structure (33) and a rear rigid panel (59) coupled to said supporting structure (33); and
- an armrest (61) set on said rear rigid panel (59) and comprising:
a) a resting body (64), and
b) connecting means (66) for displacing said resting body (64) between a stowed-away position and an extracted position, in which said resting body (64) performs the function of armrest for a user;
**characterised in that** said rear rigid panel (59) is a cover element, which is coupled to said supporting structure (33) in a fixed position and defines a rear surface (18) of the backrest (10); and **in that** said resting body (64), when set in its stowed-away position, is housed in a recess (67) of said rear surface (18) and has a top surface (68) extending flush with said rear surface (18).

2. - The seat assembly according to Claim 1, **characterized in that** said connecting means (66) comprise an adjustment device (83) for positioning said resting body (64) in a plurality of height-adjustment positions with respect to said rear surface (18).

3. - The seat assembly according to Claim 1 or 2, **characterized in that** said connecting means (66) comprise an articulated quadrilateral (70) for displacing said resting body (64) in height with respect to said rear surface (18); said articulated quadrilateral (70) extending through a longitudinal slit (72) made in an end wall (73) of said recess (67).

4. - The seat assembly according to anyone of the preceding claims, **characterised in that** said armrest (61) comprises guide-and-slide means (63, 69) for enabling a displacement of said resting body (64) in a longitudinal direction (B) of advance of the vehicle; and **in that** said recess (67) has a front wall (71), which prevents said resting body (64) from advancing until said resting body (64) has been raised by a minimum height out of the recess (67).

5. - The seat assembly according to Claim 2, **characterized in that** said adjustment device comprises a ratchet-like device (83).

6. - The seat assembly according to Claims 3 and 5, **characterized in that** said ratchet-like device (83) comprises a pawl (85), carried by said resting body (64), and a toothing (84), made on a connecting rod (75) of said articulated quadrilateral (70).

7. - The seat assembly according to Claim 6, **characterized in that** said resting body (64) has an opening (91) and carries a lever control (90), which engages part of said opening (91) and can be manually actuated for disengaging said pawl (85) from said toothing (84).

8. - The seat assembly according to any one of the preceding claims, **characterized in that** it defines, in use, a front seat assembly (3).

9. - The seat assembly according to Claim 8, **characterized by** comprising two seats (4, 5) set alongside one another and having respective seat portions (7, 8) that are movable jointly.

10. - The seat assembly according to Claim 8 or 9, **characterized in that** said backrest (10) forms part of a seat (5) set, in use, in a central position adjacent to a driving seat (2).

11. - The seat assembly according to any one of the preceding claims, **characterized by** comprising moving means (34) for translating said seat portion (8) in a transverse direction (A), horizontal and orthogonal to a longitudinal direction (B) of advance of said vehicle, in response to a displacement of said backrest (10) with respect to said seat portion (8).

12. - The seat assembly according to Claim 11, **characterized in that** said seat portion (8) translates in a transverse direction (A) in response to a rotation of said backrest (10) about an axis of hinge (15) parallel to said transverse direction (A).

13. - The seat assembly according to Claim 12, **characterized in that** said seat portion (8) translates in a transverse direction (A) in response to a rotation of said backrest (10) through an angle greater than 25° with respect to a vertical direction.

14. - The seat assembly according to Claim 13, **characterized in that** said seat portion (8) translates in a transverse direction (A) in response to said backrest (10) being tipped between said raised position and said lowered position.

15. The seat assembly according to any one of Claims 12 to 14, **characterized in that** said moving means (34) comprise first moving means (38) for translating said seat portion (8) transversely in one direction in response to a rotation of said backrest (10) in one direction, and second moving means (39) for translating said seat portion (8) in the opposite direction in response to a rotation of said backrest (10) in the opposite direction.

16. - The seat assembly according to any one of Claims 12 to 15, **characterized in that** said moving means (34) comprise a mechanical transmission.

17. - The assembly according to Claim 16, **characterized by** comprising a transversely fixed structure (20) and a transversely slidable structure (26) coupled to one another; said backrest (10) being carried by said transversely slidable structure (26); said moving means (34) comprising a lever (40), which can turn together with said backrest (10) with respect to said transversely slidable structure (26) about said axis of hinge (15).

18. - The seat assembly according to Claim 17, **characterized in that** said moving means (34) comprise a cable transmission (38, 39) connected to said lever (40).

19. - The seat assembly according to Claim 18, **characterized in that** said lever is a rocker lever comprising two opposed radial arms (41, 42), and **in that** said transmission comprises two Bowden cables (38, 39) comprising respective sheaths (45, 46) and respective cores (43, 44); said cores (43, 44) comprising respective ends, each fixed to a corresponding said radial arm (41, 42); said sheaths (45, 46) comprising respective first ends, coupled to a portion (31b) of said transversely slidable structure (26), and respective second ends, coupled to said transversely slidable structure (26) and, respectively, to said transversely fixed structure (20).

## Patentansprüche

1. Sitzanordnung (3) für ein Fahrzeug, wobei die Sitzanordnung folgendes aufweist:
- mindestens einen Sitzbereich (8);
- mindestens eine Rückenlehne (10), die in bezug auf den Sitzbereich (8) zwischen einer angehobenen Position und einer abgesenkten Position, in der sie auf den Sitzbereich (8) flach nach unten gelegt ist, bewegbar ist, wobei die Rückenlehne (10) eine Abstützkonstruktion (33) und eine mit der Abstützkonstruktion (33) gekoppelte, rückwärtige starre Platte (59) aufweist; und
- eine Armlehne (61), die an der rückwärtigen starren Platte (59) angeordnet ist und die folgendes aufweist:
a) einen Auflagekörper (64), und
b) Verbindungseinrichtungen (66) zum Verlagern des Auflagekörpers (64) zwischen einer verstauten Position und einer ausgezogenen Position, in der der Auflagekörper (64) die Funktion einer Armlehne für einen Benutzer hat;
**dadurch gekennzeichnet,**
**daß** es sich bei der rückwärtigen starren Platte (59) um ein Abdeckelement handelt, das mit der Abstützkonstruktion (33) in einer feststehenden Position gekoppelt ist und eine rückwärtige Oberfläche (18) der Rückenlehne (10) bildet;
und **daß** der Auflagekörper (64), wenn sich dieser in seiner verstauten Position befindet, in einer Aussparung (67) der rückwärtigen Oberfläche (18) untergebracht ist und eine obere Oberfläche (68) aufweist, die sich bündig mit der rückwärtigen Oberfläche (18) erstreckt.

2. Sitzanordnung nach Anspruch 1,
**dadurch gekennzeichnet,**
**daß** die Verbindungseinrichtungen (66) eine Einstellvorrichtung (83) aufweisen, um den Auflagekörper (64) in einer Vielzahl von Höheneinstellungspositionen in bezug auf die rückwärtige Oberfläche (18) zu positionieren.

3. Sitzanordnung nach Anspruch 1 oder 2,
**dadurch gekennzeichnet,**
**daß** die Verbindungseinrichtungen (66) eine gelenkige vierseitige Baugruppe (70) zum Verschieben des Auflagekörpers (64) in der Höhe in bezug auf die rückwärtige Oberfläche (18) aufweisen, wobei sich die gelenkige vierseitige Baugruppe (70) durch einen in einer Endwand (73) der Aussparung (67) ausgebildeten Längsschlitz (72) hindurch erstreckt.

4. Sitzanordnung nach einem der vorausgehenden Ansprüche,
**dadurch gekennzeichnet,**
**daß** die Armlehne (61) eine Führungs- und Verschiebeeinrichtung (63, 69) aufweist, um ein Verschieben des Auflagekörpers (64) in einer Längsrichtung (B) des Fahrzeugs nach vorn zu ermöglichen;
und **daß** die Aussparung (67) eine vordere Wand (71) aufweist, die eine Bewegung des Auflagekörpers (64) nach vorn, bis dieser über eine minimale Höhe aus der Aussparung (67) heraus angehoben ist, verhindert.

5. Sitzanordnung nach Anspruch 2,
**dadurch gekennzeichnet,**
**daß** die Einstellvorrichtung eine ratschenartige Einrichtung (83) aufweist.

6. Sitzanordnung nach den Ansprüchen 3 und 5,
**dadurch gekennzeichnet,**
**daß** die ratschenartige Einrichtung (83) einen von dem Auflagekörper (64) getragenen Klinkenkörper sowie eine Verzahnung (84) aufweist, die an einer Verbindungsstange (75) der gelenkigen vierseitige Baugruppe (70) ausgebildet ist.

7. Sitzanordnung nach Anspruch 6,
**dadurch gekennzeichnet,**
**daß** der Auflagekörper (64) eine Öffnung (91) aufweist und eine Hebelsteuerung (90) trägt, die mit einem Teil der Öffnung (91) in Eingriff steht und manuell betätigt werden kann, um den Klinkenkörper (85) von der Verzahnung (84) zu lösen.

8. Sitzanordnung nach einem der vorausgehenden Ansprüche,
**dadurch gekennzeichnet,**
**daß** sie im Gebrauch eine Vordersitzanordnung (3) bildet.

9. Sitzanordnung nach Anspruch 8,
**dadurch gekennzeichnet,**
**daß** sie zwei Sitze (4, 5) aufweist, die nebeneinander angeordnet sind und jeweilige Sitzbereiche (7, 8) aufweisen, die sich gemeinsam bewegen lassen.

10. Sitzanordnung nach Anspruch 8 oder 9,
**dadurch gekennzeichnet,**
**daß** die Rückenlehne (10) einen Bestandteil eines Sitzes (5) bildet, der im Gebrauch in einer zentralen Position neben einem Fahrersitz (2) angeordnet ist.

11. Sitzanordnung nach einem der vorausgehenden Ansprüche,
**dadurch gekennzeichnet,**
**daß** sie Bewegungseinrichtungen (34) aufweist, um den Sitzbereich (8) in einer Querrichtung (A), die horizontal und orthogonal zu einer nach vorn verlaufenden Längsrichtung (B) des Fahrzeugs ist, in Abhängigkeit von einer Verlagerung der Rückenlehne (10) in bezug auf den Sitzbereich (8) translationsmäßig zu bewegen.

12. Sitzanordnung nach Anspruch 11,
**dadurch gekennzeichnet,**
**daß** der Sitzbereich (8) eine Translationsbewegung in einer Querrichtung (A) in Abhängigkeit von einer Rotationsbewegung der Rückenlehne (10) um eine Gelenkachse (15) parallel zu der Querrichtung (A) ausführt.

13. Sitzanordnung nach Anspruch 12,
**dadurch gekennzeichnet,**
**daß** der Sitzbereich (8) eine Translationsbewegung in einer Querrichtung (A) in Abhängigkeit von einer Rotationsbwegung der Rückenlehne (10) über einen Winkel von mehr als 25° in bezug auf eine Vertikalrichtung ausführt.

14. Sitzanordnung nach Anspruch 13,
**dadurch gekennzeichnet,**
**daß** der Sitzbereich (8) eine Translationsbewegung in einer Querrichtung (A) in Abhängigkeit von einer Kippbewegung der Rückenlehne (10) zwischen der angehobenen Position und der abgesenkten Position ausführt.

15. Sitzanordnung nach einem der Ansprüche 12 bis 14,
**dadurch gekennzeichnet,**
**daß** die Bewegungseinrichtungen (34) eine erste Bewegungseinrichtung (38) für eine Translationsbewegung des Sitzbereichs (8) quer in einer Richtung in Abhängigkeit von einer Rotationsbewegung der Rückenlehne (10) in der einen Richtung sowie eine zweite Bewegungseinrichtung (39) für eine Translationsbewegung des Sitzbereichs (8) in der entgegengesetzten Richtung in Abhängigkeit von einer Rotationsbewegung der Rückenlehne (10) in der entgegengesetzten Richtung aufweisen.

16. Sitzanordnung nach einem der Ansprüche 12 bis 15,
**dadurch gekennzeichnet,**
**daß** die Bewegungseinrichtungen (34) eine mechanische Transmissionseinrichtung aufweisen.

17. Anordnung nach Anspruch 16,
**dadurch gekennzeichnet,**
**daß** sie eine in Querrichtung festgelegte Konstruktion (20) und eine in Querrichtung verschiebbare Konstruktion (26) aufweist, die miteinander gekoppelt sind; wobei die Rückenlehne (10) von der in Querrichtung verschiebbaren Konstruktion (26) getragen ist; und
wobei die Bewegungseinrichtungen (34) einen Hebel (40) aufweisen, der sich zusammen mit der Rückenlehne (10) in bezug auf die in Querrichtung verschiebbare Konstruktion (26) um die Gelenkachse (15) drehen kann.

18. Sitzanordnung nach Anspruch 17,
**dadurch gekennzeichnet,**
**daß** die Bewegungseinrichtungen (24) eine mit dem Hebel (40) verbundene Seilzug-Transmissionseinrichtung (38, 39) aufweisen.

19. Sitzanordnung nach Anspruch 18,
**dadurch gekennzeichnet,**
**daß** es sich bei dem Hebel um einen Kipphebel mit zwei einander gegenüberliegenden radialen Armen (41, 42) handelt,
und **daß** die Transmissionseinrichtung zwei Bowden-Seilzüge (38, 39) mit jeweiligen Umhüllungen (45, 46) und jeweiligen Kernen (43, 44) aufweist, wobei die Kerne (43, 44) jeweilige Enden aufweisen, die an einem entsprechenden Arm der radialen Arme (41, 42) befestigt sind;
und **daß** die Umhüllungen (45, 46) ein jeweiliges erstes Ende, das mit einem Bereich (31 b) der in Querrichtung verschiebbaren Konstruktion (26) gekoppelt ist, sowie ein jeweiliges zweites Ende aufweisen, das mit der in Querrichtung verschiebbaren Konstruktion (26) bzw. mit der in Querrichtung festgelegten Konstruktion (20) gekoppelt ist.

## Revendications

1. Ensemble de siège (3) pour véhicule, l'ensemble de siège comprenant :
- au moins une partie de siège (8),
- au moins un dossier (10) qui peut être déplacé par rapport à ladite partie de siège (8) entre une partie relevée et une partie abaissée dans laquelle il repose à plat sur ladite partie de siège (8), ledit dossier (10) comprenant une structure de support (33) et un panneau rigide arrière (59) relié à ladite structure de support (33), et
- un accoudoir (61) disposé sur ledit panneau rigide arrière (59) et comprenant :
a) une structure de repos (64) et
b) un moyen de liaison (66) destiné à déplacer ladite structure de repos (64) entre une position rangée et une position extraite, dans laquelle ladite structure de repos (64) remplit la fonction d'un accoudoir pour un utilisateur,
**caractérisé en ce que** ledit panneau rigide arrière (59) est un élément de couvercle, qui est relié à ladite structure de support (33) dans une position fixe et définit une surface arrière (18) du dossier (10), et **en ce que** ladite structure de repos (64), lorsqu'elle est disposée dans sa position rangée, est logée dans un évidement (67) de ladite surface arrière (18) et comporte une surface supérieure (68) s'étendant au ras de ladite surface arrière (18).

2. Ensemble de siège selon la revendication 1, **caractérisé en ce que** ledit moyen de liaison (66) comprend un dispositif de réglage (43) destiné à positionner ladite structure de repos (64) dans une pluralité de positions de réglage de hauteur par rapport à ladite surface arrière (18).

3. Ensemble de siège selon la revendication 1 ou 2, **caractérisé en ce que** ledit moyen de liaison (66) comprend un quadrilatère articulé (70) destiné à déplacer ladite structure de repos (64) en hauteur par rapport à ladite surface arrière (18), ledit quadrilatère articulé (70) s'étendant à travers une fente longitudinale (72) réalisée dans une paroi d'extrémité (73) dudit évidement (67).

4. Ensemble de siège selon l'une quelconque des revendications précédentes, **caractérisé en ce que** ledit accoudoir (61) comprend un moyen de guidage et de coulissement (63, 69) pour permettre un déplacement de ladite structure de repos (64) dans une direction longitudinale (B) d'avance du véhicule, et **en ce que** ledit évidement (67) comporte une paroi avant (71) qui empêche ladite structure de repos (64) d'avancer jusqu'à ce que ladite structure de repos (64) ait été soulevée d'une hauteur minimum en dehors de l'évidement (67).

5. Ensemble de siège selon la revendication 2, **caractérisé en ce que** ledit dispositif de réglage comprend un dispositif du type élément d'encliquetage (83).

6. Ensemble de siège selon les revendications 3 et 5, **caractérisé en ce que** ledit dispositif du type élément d'encliquetage (83) comprend un cliquet (85) supporté par ladite structure de repos (64) et une denture (84) réalisée sur une tige de raccord (75) dudit quadrilatère articulé (70).

7. Ensemble de siège selon la revendication 6, **caractérisé en ce que** ladite structure de repos (64) présente une ouverture (91) et supporte une commande à levier (90), qui s'engage avec une partie de ladite ouverture (91) et peut être actionnée manuellement pour une séparation dudit cliquet (85) de ladite denture (84).

8. Ensemble de siège selon l'une quelconque des revendications précédentes, **caractérisé en ce qu'**il définit, en utilisation, un ensemble de siège avant (3).

9. Ensemble de siège selon la revendication 8, **caractérisé en ce qu'**il comprend deux sièges (4, 5) disposés côte à côte et comportant des parties de sièges respectives (7, 8) qui peuvent être déplacées conjointement.

10. Ensemble de siège selon la revendication 8 ou 9, **caractérisé en ce que** ledit dossier (10) fait partie d'un siège (5) disposé, en utilisation, dans une position centrale adjacente à un siège de conduite (2).

11. Ensemble de siège selon l'une quelconque des revendications précédentes, **caractérisé par le fait qu'**il comprend un moyen de déplacement (34) destiné à déplacer en translation ladite partie de siège (8) dans une direction transversale (A), horizontale et orthogonale à une direction longitudinale (B) d'avance dudit véhicule, en réponse à un déplacement dudit dossier (10) par rapport à ladite partie de siège (8).

12. Ensemble de siège selon la revendication 11, **caractérisé en ce que** ladite partie de siège (18) se déplace en translation dans une direction transversale (A) en réponse à une rotation dudit dossier (10) autour d'un axe d'articulation (15) parallèle à ladite direction transversale (A).

13. Ensemble de siège selon la revendication 12, **caractérisé en ce que** ladite partie de siège (8) se déplace en translation dans une direction transversale (A) en réponse à une rotation dudit dossier (10) sur un angle supérieur à 25° par rapport à une direction verticale.

14. Ensemble de siège selon la revendication 13, **caractérisé en ce que** ladite partie de siège (8) se déplace en translation dans une direction transversale (A) en réponse audit dossier (10) qui est incliné entre ladite position relevée et ladite position abaissée.

15. Ensemble de siège selon l'une quelconque des revendications 12 à 14, **caractérisé en ce que** ledit moyen de déplacement (34) comprend un premier moyen de déplacement (38) destiné à déplacer en translation ladite partie de siège (8) transversalement dans une première direction en réponse à une rotation dudit dossier (10) dans une première direction, et un deuxième moyen de déplacement (39) destiné déplacer en translation ladite partie de siège (8) dans la direction opposée en réponse à une rotation dudit dossier (10) dans la direction opposée.

16. Ensemble de siège selon l'une quelconque des revendications 12 à 15, **caractérisé en ce que** ledit moyen de déplacement (34) comprend une transmission mécanique.

17. Ensemble selon la revendication 16, **caractérisé en ce qu'**il comprend une structure fixe transversalement (20) et une structure pouvant coulisser transversalement (26) reliées l'une à l'autre, ledit dossier (10) étant supporté par ladite structure pouvant coulisser transversalement (26), ledit moyen de déplacement (34) comprenant un levier (40) qui peut tourner en même temps que ledit dossier (10) par rapport à ladite structure pouvant coulisser transversalement (26) autour dudit axe d'articulation (15).

18. Ensemble de siège selon la revendication 17, **caractérisé en ce que** ledit moyen de déplacement (34) comprend une transmission par câbles (38, 39) reliée audit levier (40).

19. Ensemble de siège selon la revendication 18, **caractérisé en ce que** ledit levier est un levier de bascule comprenant deux bras radiaux opposés (41, 42) et **en ce que** ladite transmission comprend deux câbles Bowden (38, 39) comprenant des gaines respectives (45, 46) et des âmes respectives (43, 44), lesdites âmes (43, 44) comprenant des extrémités respectives, chacune fixée à un dit bras radial correspondant (41, 42), lesdites gaines (45, 46) comprenant des premières extrémités respectives reliées à une partie (31b) de ladite structure pouvant coulisser transversalement (26) et des deuxièmes extrémités respectives reliées à ladite structure pouvant coulisser transversalement (26) et, respectivement, à ladite structure fixe transversalement (20).
